# EUROPEAN PATENT SPECIFICATION

(11) **EP 1 745 881 B1**
(45) Date of publication and mention of the grant of the patent: **03.09.2008**
(21) Application number: 06015015.8
(22) Date of filing: 19.07.2006
(51) Int. Cl.: B23K 11/25, B23K 11/31, G05B 19/19

(54) **Servo controller for spot welding gun**
Servo-commande pour pince de soudage par point
Servo-Regler für eine Punktschweisszange

(30) Priority: 21.07.2005 JP 2005211487
(43) Date of publication of application: 24.01.2007
(73) Proprietor: FANUC LTD, Minamitsuru-gun, Yamanashi 401-0597 (JP)
(72) Inventor: Kato, Tetsuaki, Hadano-shi, Kanagawa 259-1326 (JP); Arita, Soichi, Minamitsuru-gun, Yamanashi 401-0511 (JP); Mogami, Kouta, Kamiina-gun, Nagano 399-4511 (JP)
(74) Representative: Thum, Bernhard

(56) References cited:
- EP-A1- 0 933 868
- EP-A1- 0 943 389
- EP-A2- 0 534 690

## Description

The present invention relates to a servo controller for a spot welding gun for controlling a pressurizing force, applied by a pair of mutually-opposing gun chips, on an object to be welded, including at least one movable gun chip, which is held between the pair of gun chips, by causing a drive source of the movable gun chip to drive the movable gun chip in a direction in order to pressurize the object to be welded.

### Description of the Related Art

A servo controller for a spot welding gun, for controlling a pressurizing force which is applied to an object to be welded held between a pair of gun chips, is conventionally disclosed in JP-A-11-65676or EP-A-0 933 868. The servo controller controls a pressurizing force by feedback control so that an actual pressurizing-force value can be made to agree with a required pressurizing-force value. In this servo controller, a command value, which is obtained when a difference value between the actual pressurizing-force value and the required pressurizing-force value is multiplied by a pressurizing force control gain, becomes a servo motor speed command value for driving a pair of gun chips. A command value, which is obtained when a difference between this speed command value and the actual servo motor speed is multiplied by a speed control gain, becomes a servo motor torque command value.

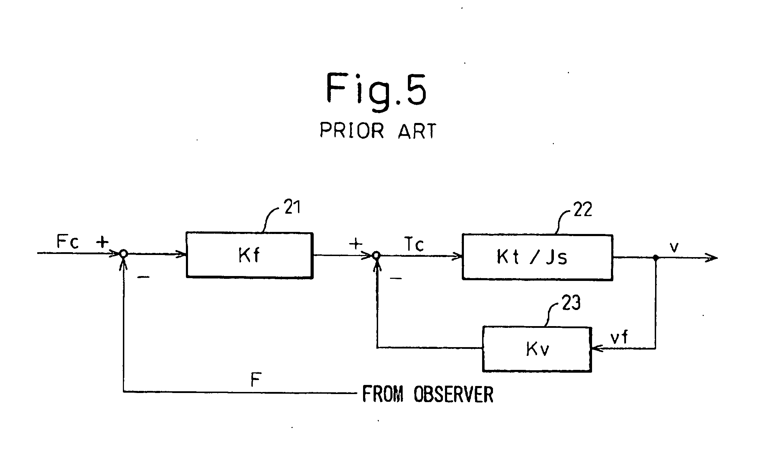

As illustrated in Fig. 5, the pressurizing force control gain K_{f} which is the transfer function 21 of feedback control, the transfer function 22 of the servo motor and the speed control gain K_{y} which is the transfer function 23 of speed feedback are shown in this document. In the terms of the transfer function 22, Kₜ is a torque constant of the servo motor for driving a chip of the welding gun, J is inertia and s is the Laplace operator in differential calculus. In this feedback control, the equivalent pressurizing-force value F, which is estimated by an observer, is subtracted from the required pressurizing-force value F_{c}, and the thus obtained difference value (F_{c} - F) is multiplied by the pressurizing force control gain K_{f}.

In this related art, the period of time in which the equivalent pressurizing-force value F reaches the required pressurizing-force value F_{c} is determined by the time constant of this control system. For example, a command value, which is obtained when the difference value (F_{c} - F) between the equivalent pressurizing-force value F and the required pressurizing-force value F_{c} is multiplied by the pressurizing force control gain K_{f}, becomes a speed command value. In a control system in which a value, which is obtained by subtracting a value, obtained when the actual speed is multiplied by the speed control gain Kᵥ, from this speed command value, is made to be a torque command value T_{c}, the period of time in which the equivalent pressurizing-force value F reaches the required pressurizing-force value F_{c} is determined by the pressurizing force control gain K_{f}. The more the pressurizing force control gain K_{f} is increased, the more the period of time to reach the required pressurizing-force value F_{c} is decreased.

However, when the pressurizing force control gain K_{f} is increased, the control system tends to become unstable. Therefore, depending upon the structure of the spot welding gun, it is impossible to sufficiently increase the pressurizing force control gain K_{f} in some cases. In this case, it takes time for the pressurizing force between the chips, to reach the required pressurizing-force value in the spot welding gun. Therefore, it is impossible to increase the response of the control system.

### SUMMARY OF THE INVENTION

An object of the present invention is to provide a servo controller for a spot welding gun capable of sufficiently reducing the period of time in which an obtained pressurizing force value, between chips, reaches a required pressurizing-force value (target pressurizing-force value).

In order to accomplish the above object, the present invention provides a servo controller for a spot welding gun for controlling a pressurizing force, applied by a pair of mutually-opposing gun chips, on an object to be welded, including at least one movable gun chip, which is held between the pair of gun chips, by causing a drive source of the movable gun chip to drive the movable gun chip in a direction in order to pressurize the object to be welded. The servo controller includes a feedback control section for calculating a difference value between an obtained pressurizing-force value and a required pressurizing-force value, and a feedforward control section for adding a correcting command value, obtained from a position command value or a speed command value for the drive source, to the difference value.

According to the present invention, the servo controller includes a feedback control section for calculating a difference value between the obtained pressurizing-force value and the required pressurizing-force value by the feedback control. Due to the foregoing, the drive source for driving the movable-side gun chip can be directly controlled according to the pressurizing force. Further, the servo controller includes a feedforward control section for adding the correcting command value obtained from the position command value or the speed command value for the drive source, to the difference value. Therefore, even in the case where the pressurizing force gain can not be increased, it is possible to obtain the same effect as that of the case in which the pressurizing force gain is increased. Accordingly, it is possible to sufficiently reduce a period of time in which the obtained pressurizing-force value, between the chips, reaches the required pressurizing-force value. Therefore, the response can be enhanced.

The present invention provides a servo controller including a switch section for nullifying the feedforward control section at the point in time when the obtained pressurizing-force value reaches a predetermined threshold value. According to this invention, an amount of overshooting of the obtained pressurizing-force value can be adjusted. Therefore, the obtained pressurizing-force value between the chips can be stabilized.

The present invention provides a servo controller in which the threshold value is identical to the required pressurizing-force value. According to this invention, the feedforward control is effective until the pressurizing force between chips reaches the required pressurizing-force value. Therefore, the obtained pressurizing-force value can reach the required pressurizing-force value in the shortest period of time. Further, it is possible to suppress the amount of overshoot.

The present invention provides a servo controller in which the obtained pressurizing-force value is an equivalent pressurizing-force value as estimated by an observer or simulation. According to this invention, it is unnecessary to provide a pressure sensor such as a load cell for detecting a pressurizing-force value. Accordingly, the pressurizing-force value can be detected at a low cost. The equivalent pressurizing-force value is estimated from a motor speed and others. Therefore, the equivalent pressurizing-force value can be measured even while a welding gun is being energized, that is, even while welding is being conducted. Therefore, a pressurizing-force can be accurately controlled without being affected by a position and posture of a robot. As a result, the reliability of the quality of the spot welding can be enhanced.

### BRIEF DESCRIPTION OF THE DRAWINGS

The above and other objects, characteristics and advantages of the present invention will become more apparent from the following descriptions of embodiments with reference to the accompanying drawings in which:
Fig. 1 is a block diagram showing a servo controller for a spot welding gun;
Fig. 2 is a circuit diagram showing a servo controller for a spot welding gun of the first embodiment of the present invention;
Fig. 3 is a circuit diagram showing a servo controller for a spot welding gun of the second embodiment of the present invention;
Fig. 4 is a circuit diagram showing a variation of the servo controller for the spot welding gun shown in Fig. 3; and
Fig. 5 is a circuit diagram showing an example of the conventional servo controller.

### DETAILED DESCRIPTION

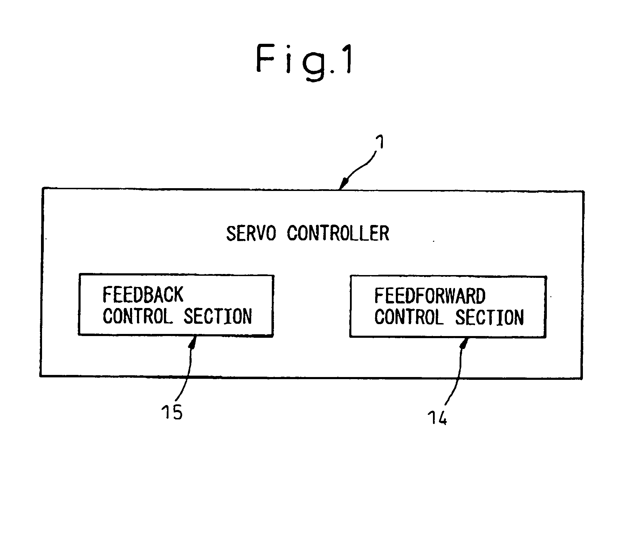

Referring to the drawings, a specific embodiment of the present invention will be explained below in detail. Fig. 1 is a view showing a configuration of the servo controller for the spot welding gun. As shown in fig. 1, the servo controller includes: a feedback control section 15 for calculating a difference value (F_{c} - F) between the equivalent pressurizing-force value F (obtained pressurizing-force value) estimated by a observer 12 and the required pressurizing-force value F_{c} ; and a feedforward control section 14 for adding the correcting command value Vᵤ, which is calculated according to the position command value Up for the servo motor (the drive source) 2, to the difference value (F_{c} - F). When processing is conducted on the observer 12 which estimates the equivalent pressurizing-force value F of a pair of gun chips of the spot welding gun and when controlling of the pressurizing force is conducted according to the equivalent pressurizing-force value F estimated by this observer 12, the equivalent pressurizing force F between the chips of the spot welding gun can be made to agree with the pressurizing force command value F_{c}. In this connection, processing conducted by the observer 12 is well known. Therefore, explanations of the processing conducted by the observer 12 are omitted in this specification. Concerning the processing conducted by the observer 12, for example, refer to the official gazette of JP-A-11-58024.

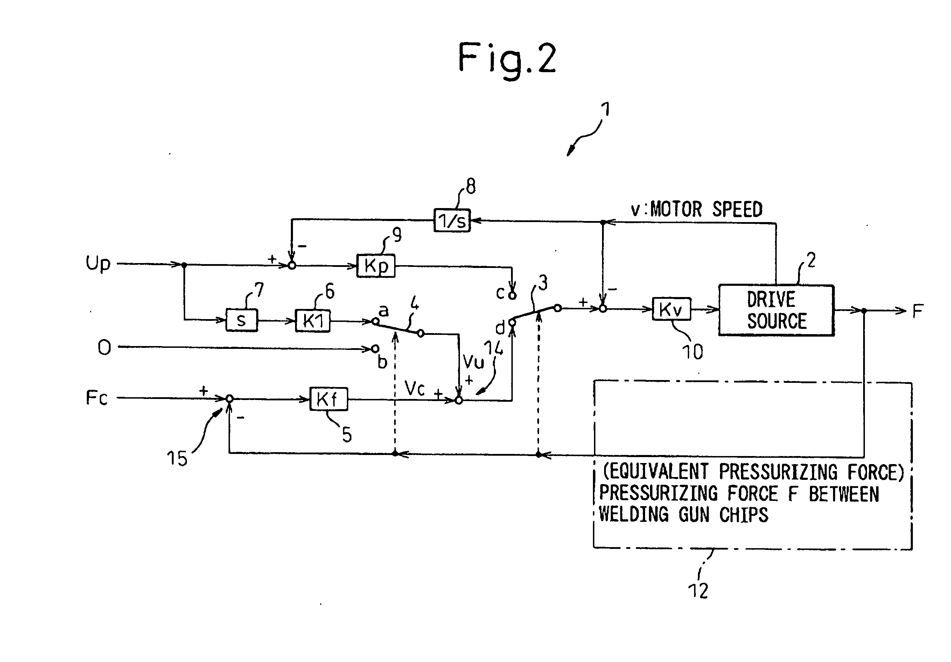

Fig. 2 is a view showing the first embodiment of the servo controller for the spot welding gun of the present invention.

The servo controller for this embodiment is a servo controller for a spot welding gun for controlling a pressurizing force applied to an object to be welded, which is held between a pair of gun chips, by driving one movable chip in the pair of gun chips, which are opposed to each other, in a direction opposite to each other. The servo controller for this embodiment is bus-connected to a host controller for a welding robot (not shown) via a common memory.

The host controller not shown includes a CPU, an input and output interface, ROM, RAM and non-volatile RAM. A teaching operation panel for teaching various operations to a robot and for setting various setting values and parameters is connected to the input and output interface. ROM stores a system program, and the non-volatile RAM stores an operation program, various setting value, parameters and a required pressurizing-force value (target pressurizing-force value) of the spot welding gun. RAM stores an equivalent pressurizing-force value of the spot welding gun estimated by an observer.

The common memory (not shown) is used for sending and receiving a signal between the CPU of a host controller, and the CPU of the servo controller. A position command value, speed command value and pressurizing force command value are sent from the host controller side to the servo controller side. On the contrary, a signal expressing a state of the servo motor is sent from the servo controller side to the host controller side.

The servo controller composes a digital servo circuit having a CPU not shown, various memories and input and output interface and conducts position-control, speed-control and torque (current) -control.

As shown in Fig. 2, in a circuit diagram, reference numeral 2 is a drive source to be controlled which is a servo motor, reference numerals 3 and 4 are respectively a switch (a switch section) for switching a control method, reference numeral 5 is a pressurizing force control gain K_{f}, reference numeral 6 is a feedforward gain K₁ with respect to the pressurizing force control gain K_{f}, s, which is expressed by reference numeral 7, is a Laplace operator in differential calculus, (1/s), which is expressed by reference numeral 8, is a Laplace operator in integral calculus, reference numeral 9 is a position control gain Kₚ, and reference numeral 10 is a speed control gain Kᵥ.

In this control system, an operation is conducted as follows. When a pair of gun chips of the spot welding gun are separated from each other, the switch 3 is connected to the terminal c and, according to the position command value Up, the servo motor of the drive side gun chip is moved while being subjected to position control. An interval between a pair of spot welding gun chips is reduced and the drive side gun chip comes into contact with an object to be welded. At a point of time when the equivalent pressurizing-force value F of the spot welding gun exceeds a predetermined value, the switch 3 is contacted to the terminal d. Therefore, control is changed over to the pressurizing force control which is conducted according to the pressurizing force command value F_{c}.

The servo motor 2 is controlled in the above two stages. One is a position control stage and the other is a pressurizing force control stage. In the pressurizing force control, feedback control is conducted by the feedback control section 15. Therefore, a pressurizing force of the spot welding gun applied to an object to be welded can be accurately controlled. In the feedback control section 15, the observer 12 is used for estimating the equivalent pressurizing-force value F. Therefore, it is unnecessary to provide a pressure sensor such as a load cell. Accordingly, it is possible to calculate the equivalent pressurizing-force value F without incurring any cost. The equivalent pressurizing-force value F is a pressurizing-force value as estimated from the speed of is a motor output. Therefore, even while the welding gun is being energized, that is, even while welding is being conducted, it is possible to estimate the pressurizing force. Accordingly, the reliability of quality of spot welding can be enhanced. In this connection, it is preferable that the equivalent pressurizing-force value F, which is fed back, is estimated by a detection section which substitutes for a conventional pressure sensor. The equivalent pressurizing-force value F can be a pressurizing-force value estimated by a simulation.

In the pressurizing force control, the speed command value V_{c} is calculated when the difference value (F_{c} - F), between the equivalent pressurizing-force value F of the spot welding gun and the required pressurizing-force value F_{c}, is multiplied by the pressurizing force control gain K_{f}, and the correcting command value Vᵤ, which is calculated according to the position command value Uₚ, is added to the speed command value V_{c} via the switch 4 by the feedforward control section 14. In the feedforward control section 14, when the position command value Uₚ, which is sent from the host controller, is differentiated, it is converted into a speed. When it is multiplied by the feedforward gain Kₗ, the correcting command value Vᵤ is calculated. When this correcting command value Vᵤ is added to the speed command value V_{c}, the equivalent pressurizing-force value F between the chips can be more quickly made to agree with the required pressurizing-force value F_{c}, that is, it is possible to enhance the response of this control system. That is, when the correcting command value Vᵤ, which is calculated by the feedforward control section 14, is added to this control system, it is possible to provide the same action and effect as those in the case in which the pressurizing force gain K_{f} is increased.

Next, a difference value, between the speed command value (V_{c} + Vᵤ) and the motor speed which is fed back from the servo motor 2, is calculated. When this difference value is multiplied by the speed control gain Kᵥ, a torque (current) command value is obtained. When the equivalent pressurizing-force value F agrees with the required pressurizing-force value F_{c} and spot welding has been completed, the switch 2 is connected to the terminal c and the servo motor for driving the spot welding gun is returned to the initial state.

In this connection, a value of the correcting command Vᵤ of the feedforward control section 14 to be added via the switch 4 can be adjusted by the feedforward gain K₁. Accordingly, the equivalent pressurizing-force value F can be smoothly raised to the required pressurizing-force value F_{c}.

However, at the point of time when the equivalent pressurizing-force value F of the spot welding gun reaches the required pressurizing-force value F_{c}, the position of the gun chip is unknown. Therefore, when the position command value Up is high, even if F > F_{c}, overshooting is caused by the feedforward control section 14 described before. Therefore, in the present embodiment, the switch 4 is provided so that the correcting command value Vᵤ can be made 0 when F > F_{c}. When the switch 4 is provided, in the case where the equivalent pressurizing-force value F of the spot welding gun is lower than the required pressurizing force value F_{c}, the correcting command value is added to the control system on the basis of the position command value Uₚ. Therefore, even in the case of a welding gun, the pressurizing force control gain K_{f} is low and a pressurizing force of the spot welding gun can be quickly raised. When the switch 3 is connected to the terminal b so that the correcting command value Vᵤ can become 0 when the equivalent pressurizing-force value F overshoots, it is possible to prevent the equivalent pressurizing-force value F from overshooting again.

As described above, this embodiment of the present invention includes a feedforward control section 14 in which the correcting command value Vᵤ, which is calculated according to the position command value Up for the servo motor 2, is added to the difference value (F_{c} - F) between the equivalent pressurizing-force value F and the required pressurizing-force value F_{c}. Therefore, even in the case of a large spot welding gun of low rigidity in which the pressurizing force control gain K_{f} cannot be increased, it is possible to provide the same effect as that of a case in which the pressurizing force control gain K_{f} is increased. Therefore, the pressurizing force between the chips can more quickly reach the required pressurizing-force value F_{c}. Due to the foregoing, the cycle time can be reduced and the working efficiency can be enhanced.

Next, an explanation will be made regarding the second embodiment of the servo controller for the spot welding gun of the present invention. In this connection, like reference characters are used to indicate like components in the first and the second embodiment, and explanations are omitted.

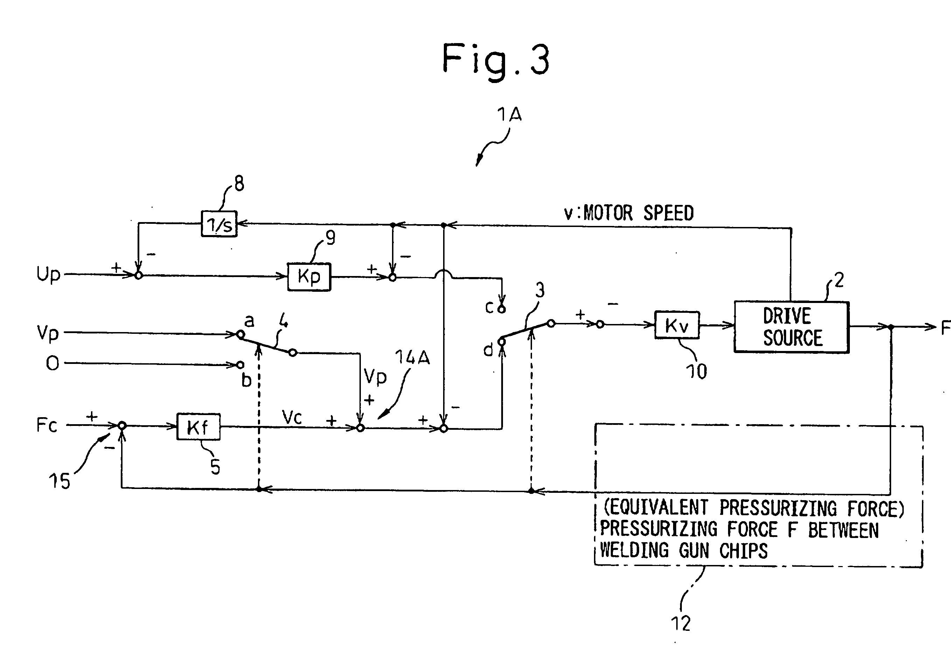

As shown in Fig. 3, in the servo controller 1A of this embodiment, the correcting command value Vₚ is a speed command value Vₚ sent from the host controller. At this point, the second embodiment is different from the first embodiment in which the correcting command value Vᵤ is calculated from the position command value Up. The forward control section 14A of this embodiment is a means for adding a speed command value Vₚ, which is sent from the host controller, to the speed command value V_{c} via the switch 4.

In the same manner as that of the first embodiment, when a pair of gun chips of the spot welding gun is separated from each other, the switch 3 is connected to the terminal c and position control is conducted according to the position command value Up. The pair of gun chips of the spot welding gun comes into contact with an object to be welded. At the point in time when the equivalent pressurizing-force value F exceeds a predetermined value, the switch 3 is connected to the terminal d, and the pressurizing force control is conducted according to the pressurizing force command value F_{c}. When the switch 3 is connected to the terminal d, the difference value (F_{c} - F) between the equivalent pressurizing-force value F and the required pressurizing force value F_{c} is multiplied by the pressurizing force control gain K_{f}. Then, the correcting command value Vₚ, made by the feedforward control section 14A, is added to the speed command value V_{c}. A value, which is obtained when the difference between this speed command value (V_{c} + Vₚ) and the motor speed is multiplied by the speed control gain Kᵥ, is a torque command value of the drive source.

In this connection, the correcting command value Vₚ is selected by the switch 4 so that it can be the speed command value Vₚ or 0. However, it is possible that the correcting command value Vₚ is determined by the relative positions of the gun chip and the object to be welded.

In this embodiment, in the case where the speed command value Vₚ is made to be constant, the equivalent pressurizing-force value F of the gun chip, in which a position of the servo motor 2 for driving the gun chip and the equivalent pressurizing-force value F of the gun chip are proportional (linear) to each other, can be increased at a substantially constant speed. In this control system, a speed of the gun chip at the point of time when the feedforward control is nullified can be designated by the feedforward control. Therefore, an amount of overshooting after the feedforward control has been nullified can be adjusted. That is, when the speed command value Vₚ is made to be a constant speed, even after the feedforward control has been nullified by the switch 4, the pressurizing force is increased by a constant value. Therefore, consideration is given to an increase in the pressurizing force after the feedforward control is nullified by the required pressurizing-force value F_{c}, and the feedforward control is nullified by the equivalent pressurizing-force value F, the intensity of which is lower and corresponds to the increase in the pressurizing force. Due to the foregoing, the equivalent pressurizing-force value F of the spot welding gun can be made to agree with the required pressurizing-force value F_{c} without causing any overshoot.

According to this second embodiment, the correcting command value _{Vp} given by the feedforward control section 14A is a speed command value Vₚ. Therefore, the response of the pressurizing force can be enhanced. Further, when the switch 4 is changed over, an amount of overshoot can be reduced.

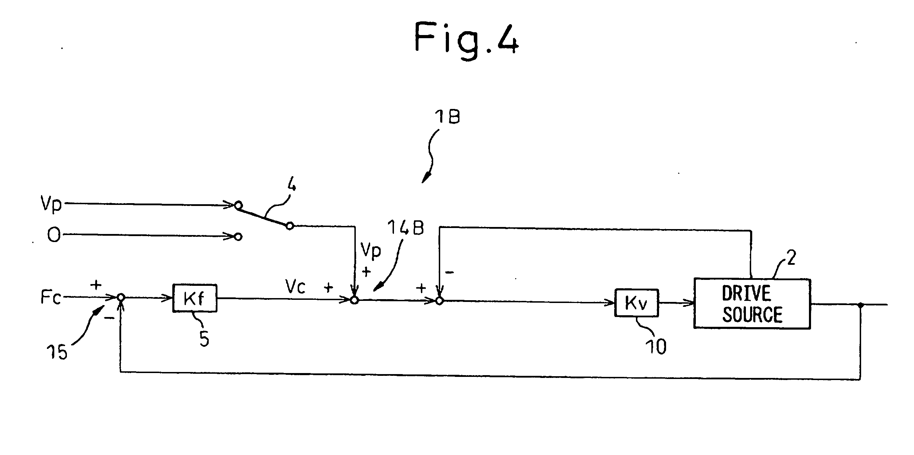

In this connection, it should be noted that the present invention is not limited to the above specific embodiment and that variations may be made. In the first and the second embodiment, the position control conducted according to the position command value Uₚ and the pressurizing force control conducted according to the required pressurizing force value F_{c} can be changed over by the switch 3. However, as shown in Fig. 4, it is possible to employ a servo controller 1B in which the position control is not conducted. In this case, in order to enhance the response of servo control, it is preferable to use a speed command value of a constant speed as the correcting command value Vₚ.

In this embodiment, the observer is used as a means for estimating a pressurizing-force value. However, it is possible to use a pressure sensor such as a load cell. Even when the observer is changed to the pressure sensor, the action and effect of the present invention are not changed.

The present invention is explained above referring to the preferred embodiments. However, it should be noted that variations may be made by those skilled in the art without departing from the scope of the claim of the present invention as described later.

## Claims

1. A servo controller (1, 1A, 1B) for a spot welding gun for controlling a pressurizing force, applied by a pair of mutually-opposing gun chips, on an object to be welded, including at least one movable gun chip, which is held between the pair of gun chips, by causing a drive source of the movable gun chip to drive the movable gun chip in a direction in order to pressurize the object to be welded,
wherein the servo controller for the spot welding gun comprises:
a feedback control section (15) for calculating a difference value (F_{c} - F) between an obtained pressurizing-force value and a required pressurizing-force value; and **characterized by**
a feedforward control section (14, 14A, 14B) for adding a correcting command value, obtained from a position command value or a speed command value for the drive source (2), to the difference value,
wherein the obtained pressurizing-force value is controlled based on a control command value provided by adding the correcting command value to the difference value.

2. A servo controller (1, 1A, 1B) for a spot welding gun according to claim 1,
further comprising a switch section (4) for nullifying the feedforward control section (14, 14A, 14B) at a point in time when the obtained pressurizing-force value reaches a predetermined threshold value.

3. A servo controller (1, 1A, 1B) for a spot welding gun according to claim 2,
wherein the threshold value is identical to the required pressurizing-force value.

4. A servo controller (1A) for a spot welding gun, according to one of claims 1 to 3,
wherein the obtained pressurizing-force value is an equivalent pressurizing-force value estimated by an observer (12) or a simulation.

## Patentansprüche

1. Servoregelungseinheit (1A, 1B) für eine Punktschweißzange zum Steuern einer Druckkraft, die über ein zumindest eine bewegbare Zangenkappe aufweisendes Paar von gegenüberliegenden Zangenkappen auf ein zu schweißendes Objekt ausgeübt wird, das zwischen dem Paar von Zangenkappen gehalten wird, wobei der Antrieb der bewegbaren Zangenkappe die bewegbare Zangenkappe in eine Richtung antreibt, um das zu schweißende Objekt mit Druck zu beaufschlagen, wobei die Servoregelungseinheit für die Punktschweißzange aufweist:
einen Rückkopplungsregelabschnitt (15) zum Berechnen eines Differenzwerts (F_{c} - F) zwischen einem erhaltenen Druckkraftwert und einem benötigten Druckkraftwert; und **gekennzeichnet durch**
einen Vorwärtsregelabschnitt (14, 14A, 14B) zum Addieren eines Berichtigungssollwerts, der von einem Positionssollwert oder einem Geschwindigkeitssollwert für den Antrieb (2) erhalten wird, zu dem Differenzwert,
wobei der erhaltene Druckkraftwert basierend auf einem Steuersollwert gesteuert wird, der **durch** Addieren des Berichtigungssollwerts zu dem Differenzwert erzeugt wird.

2. Servoregelungseinheit (1, 1A, 1B) für eine Punktschweißzange nach Anspruch 1, ferner aufweisend einen Schaltabschnitt (4) zum Zurücknehmen des Vorwärtsregelabschnitts (14, 14A, 14B) zu einem Zeitpunkt, an dem der Druckkraftwert einen vorbestimmten Schwellenwert erreicht.

3. Servoregelungseinheit (1, 1A, 1B) für eine Punktschweißzange nach Anspruch 2, wobei der Schwellenwert identisch zu dem benötigten Druckkraftwert ist.

4. Servoregelungseinheit (1A) für eine Punktschweißzange nach einem der Ansprüche 1 bis 3, wobei der erhaltene Druckkraftwert ein äquivalenter durch einen Ermittler (12) oder eine Simulation geschätzter Druckkraftwert ist.

## Revendications

1. Servocommande (1, 1A, 1B) pour une pince de soudage par points pour commander une force de mise sous pression, appliquée par une paire de branches de pince mutuellement opposées, sur un objet à souder, incluant au moins une branche de pince mobile, qui est maintenu entre la paire de branches de pince, en faisant qu'une source d'entraînement de la branche de pince mobile entraîne la branche de pince mobile dans une direction afin de mettre sous pression l'objet à souder,
dans laquelle la servocommande pour la pince de soudage par points comprend :
une section de commande rétroactive (15) pour calculer une valeur de différence (F_{c} - F) entre une valeur de mise sous pression obtenue et une valeur de mise sous pression requise ; et **caractérisée par**
une section de commande directe (14, 14A, 14B) pour ajouter une valeur de commande de correction, obtenue à partir d'une valeur de commande de position ou d'une valeur de commande de vitesse pour la source d'entraînement (2), à la valeur de différence,
dans laquelle la valeur de mise sous pression obtenue est contrôlée sur la base d'une valeur de commande de contrôle fournie en ajoutant la valeur de commande de correction à la valeur de différence.

2. Servocommande (1, 1A, 1B) pour une pince de soudage par points selon la revendication 1,
comprenant en outre une section de commutation (4) pour mettre à zéro la section de commande directe (14, 14A, 14B) à un point dans le temps où la valeur de mise sous pression obtenue atteint une valeur seuil prédéterminée.

3. Servocommande (1, 1A, 1B) pour une pince de soudage par points selon la revendication 2,
dans laquelle la valeur seuil est identique à la valeur de mise sous pression requise.

4. Servocommande (1A) pour une pince de soudage par points selon l'une quelconque des revendications 1 à 3,
dans laquelle la valeur de mise sous pression obtenue est une valeur de mise sous pression équivalente estimée par un observateur (12) ou une simulation.
